# EUROPEAN PATENT APPLICATION

(11) **EP 1 577 813 A1**
(43) Date of publication of application: **21.09.2005**
(21) Application number: 05005651.4
(22) Date of filing: 15.03.2005
(51) Int. Cl.: G06F 17/60

(54) **Software structure driven approach for implementing workflow**

(30) Priority: 15.03.2004 US 553250 P
(71) Applicant: Ramco Systems Limited, Chennai, Tamilnadu 600 113 (IN)
(72) Inventor: Sankaran, Srinlvasan, T-Nagar Chennal 600 017 (IN); Devalla, Reghuram, NGO Colony Adambakkam, Chennal 600 088 (IN)
(74) Representative: Clarke, Alison Clare

(57) **Abstract**

A system and method provide routing capabilities and identification states for documents in an enterprise software application (100). In an embodiment, details of an enterprise application are captured in a repository specification (110) and a workflow configuration model (130), user actions that enable workflow are identified (602), a design of the enterprise application is extended (604) to user actions, and method invocations and service executions are added (605) to the repository specification (110). Also described are versions of a computer readable medium capable of executing the system and method.

## Description

### Technical Field

The present invention relates to enterprise software applications, and in particular, the design of workflow functions in such enterprise applications.

### Background

Enterprise applications are constructed out of many interacting modules and functions that work together to enable a business to be more competitive in the marketplace. A key element of such enterprise applications is that they provide workflow capabilities. One aspect of workflow capabilities is that a user is informed of documents that he has to work on, rather than the user having to poll the system periodically to look for any pending work.

In such enterprise applications, the workflow capability has to take care of both the routing of the document and specifying user-defined states. Therefore, the application should be designed to support such features, rather than provided these features as an add-on later on, since adding workflow at a later point in development leads to destabilization of the system. However, since different customers of the application may need different parameters for routing and document state identification, it becomes difficult to design a common solution that fits all segments and industries.

### Summary of the Invention

In one form, the invention resides in a method comprising: capturing details of an enterprise application in a repository specification and a workflow configuration model; identifying user actions that enable workflow using said details; extending a design of said enterprise application to user actions using said details; and inserting method invocations and service executions into said repository specification. In a second form, the invention resides in a system comprising: a workflow configuration model; a workflow engine; a specification repository; and a facility resident in said workflow engine, said facility being capable of including additional states to said document, wherein said workflow configuration model, said workflow engine, said specification repository, and said facility are associated with an enterprise application. Also described herein are two versions of a computer readable medium which are capable of executing the method and system stated hereinabove.

### Brief Description of the Drawings

Figure 1 illustrates an embodiment of an enterprise application of the invention.

Figure 2 illustrates an embodiment of an enterprise application that can be used in connection with an embodiment of the invention.

Figure 3 illustrates connections within and across levels of the enterprise application of Figure 2.

Figure 4 illustrates an embodiment of a computer system upon which an embodiment of the present invention may operate.

Figure 5 illustrates a user interface that can be used in connection with the invention.

Figure 6 illustrates a flow chart of an embodiment of the invention.

### Detailed Description of an Embodiment

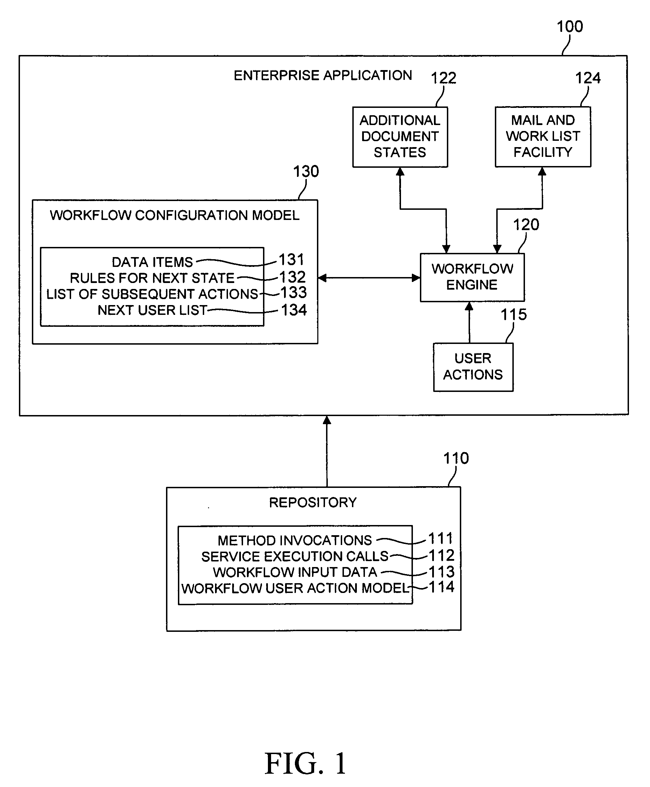

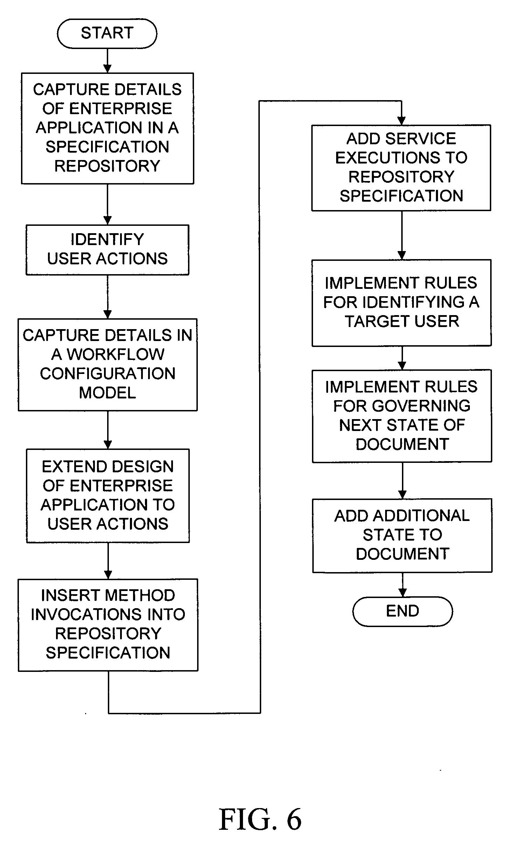

Referring to Figures 1 and 6, in an embodiment of the invention, a repository 110 contains all the details of the specification of an enterprise application 100. These details are used to identify user actions 115 that are enabled for implementing workflow via a workflow engine 120 and a workflow configuration model 130. Since user actions are identified, a common solution may be designed that will work with different customers and different industries. In an embodiment, user actions are either initiators of workflow, further the process of the workflow, or close the workflow. That is, one user action will typically lead to a workflow, further the workflow, or complete the workflow. The user actions are captured in the workflow configuration model.

For a selected user action to be enabled for workflow, that user action information is captured in the workflow configuration model 130. For example, data items 131 that can be used for implementing rules for identifying a target user of an action may be captured, and this set of data items forms the basis on which the workflow engine 120 will evaluate the rules. Also, rules for governing the next state 132 of the document may be captured. These rules act on the preconfigured data items for that particular user action. Additionally, subsequent actions 133 that should be performed, based on a current user action, may be captured, along with a next user list 134.

In an embodiment, user action information (131, 132, 133, 134) is stored in the workflow configuration model 130 as illustrated in Figure 1, and this information is specific to every workflow enabled user action. This information is then used to extend the design of the responses of the system to the user actions, once again with the goal to build an application suitable for different customers and industries. As a first step, method invocations 111 are inserted into the specifications repository 110, and these invocations extract the data required for evaluating the rules (*i.e.,* the rules for identifying a target user of an action). Then, service execution calls 112 for executing the workflow engine may also be embedded as part of the extended design in the repository. The repository 110 also contains workflow input data 113, and the design time configuration of the workflow model for user actions 114.

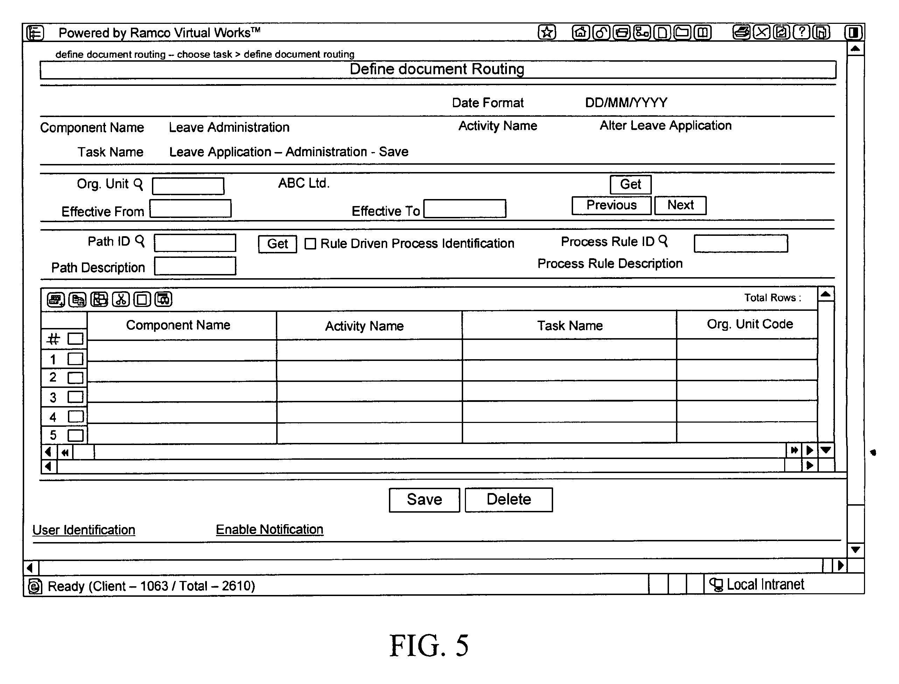

In another embodiment, a facility is provided for building a query to identify the next user who is required to work on a transaction document in the enterprise application. These next user queries are part of the workflow configuration model, and are based on rules that users can configure within the workflow configuration model. The facility may work through a user interface such as the one illustrated in Figure 5. In an embodiment, the next user in fact may be a configurable set containing one or more users who can act on the document in different states. If the number of users who can act on a document is more than one, a rule may be specified that either one, more than one, all users, or a majority of users are required to work on the document before a document can be shuttled to a next state.

In an embodiment, the workflow configuration model 130 provides a facility 122 to add additional states to a document over and above the states supported by the enterprise application. These states are managed by the workflow engine and take care of user-defined multilevel authorization of documents. The number of such states is also configurable based on the document data. For example, a typical configuration based on document data can be as follows. Purchase orders that amount to less than 150,000 dollars may be authorized by a department head, but if a purchase order exceeds 150,000 dollars, it has to be authorized by a purchase coordination group. In turn, in the purchase coordination group, the head of the group and at least 2 members may have to approve the purchase order. Therefore, in this example, purchase orders of less than 150,000 dollars may have only one state. In contrast, for purchase orders greater than 150,000 dollars, the document may have three states, corresponding to the head and two members of the purchase group.

In another embodiment, the workflow engine 120 further provides a facility 124 for mailing the pending actions to appropriate users, and also makes the pending actions available in a specific work list page. The user can then launch the enterprise application either from the mail or through the work list. This embodiment permits the user configurable work flow to be tightly integrated with the specifications model, user defined authorization levels, rules-driven actor identification, and next state identification.

In another embodiment, user interfaces are available for capturing information such as user groups, user identification rules, document routing rules, profiles, and profiles rules.

In another embodiment, the workflow configuration model 130 helps the workflow engine 120 to determine the next state of a document. The configurator identifies the users whose actions bring a document into a particular state. In particular, the workflow configuration model is used to define the workflow rules for documents and messages. The workflow configuration model provides input to the workflow engine to determine the outcome of the evaluation of the workflow rule. The workflow configuration model then captures user defined rules for workflow states of the document, and rules for next user queries before and until a document settles into one of a valid pre-designed state of the document. The workflow configuration model also enables messaging based on user actions. There are also provisions to define rules based on which messages will be sent.

These pre-designed document states manifest as user actions on various interfaces. For example, if the issue of Employee Leave is treated as a document, the document may go through initiation, authorization, rejection, and/or cancellation states. These states may have different levels also, such as level 1 authorization and level 2 authorization.

The flow of documents through pre-defined states (and hence user actions on corresponding interfaces) are modeled into the design repository (as inputs into workflow configuration). And one or more user actions that lead to a change of state of the document are associated using relevant identification.

For example, in the event an employee desires to apply for leave of absence, different employees may apply for different types of leave (personal, family, vacation, etc.). In the model, data items that are involved may be the leave type, the number of days of leave requested, and the department of the employee. These data items are then the parameters on which rules are configured within the workflow configuration. For routing rules, an example may be that if the leave type is "personal", then one level of authorization is required.

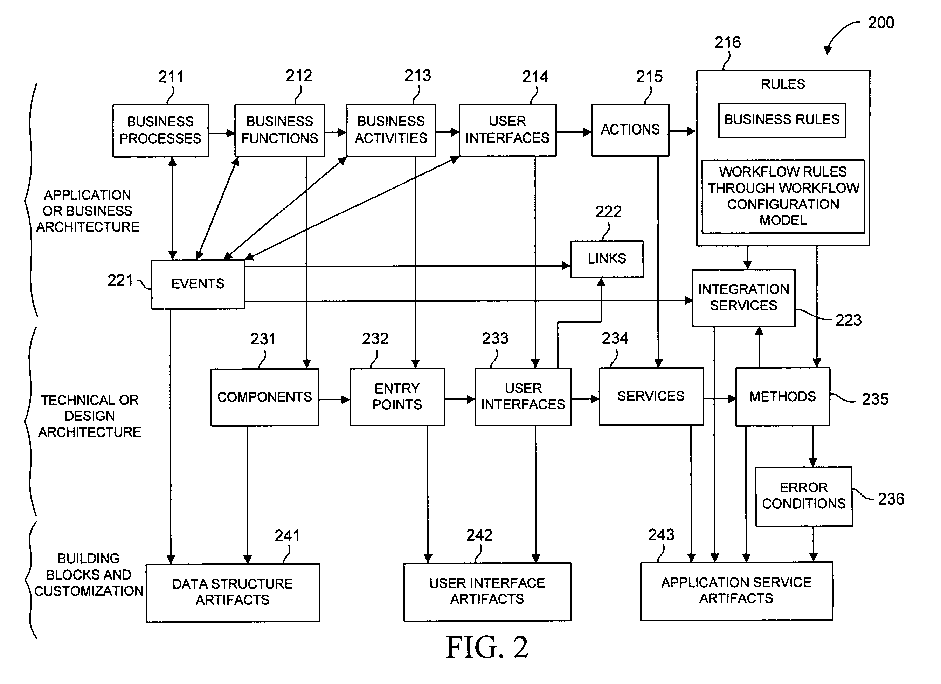

Figure 2 is a schema 200 for gathering requirements and for creating and managing enterprise software from the gathered requirements that can be implemented in connection with embodiments of the invention. Specifically, schema 200 includes multiple levels of abstraction of requirements. The first level 202 is an application or business architecture level. This level is used to define the high level requirements in context relevant syntax. The levels are stored in a database schema form in one embodiment, such that lower levels, progressing toward actual coding are linked to high levels. A second level 204 is used to represent a technical or design architecture of the first level. It serves as an intermediate link between the first level and a third level 206 that represent the actual building blocks and technology specific customization.

The first level is a process expression level. It includes a plurality of elements or units, each of which stores various aspects of specifications derived from the requirements and software built to those specifications. In some embodiments, schema level 202 includes business processes 211 that define the requirements at a level compatible with the thinking processes of business-requirements experts. In some embodiments, business processes 211 are divided into a first five units including business functions 212, business activities 213, user interfaces 214, actions 215, and business rules 216.

An example of a business process might be purchase order processing for a business. Business functions 212 would include purchase requisitioning, approval and purchase order dispatch. Business activities might include an acknowledgement, get best quote, release purchase order. User interfaces may be defined in terms of show all pending purchase orders for approval, an approval screen, and others. Actions may include things like fetch next purchase order for approval, link to next page, send acknowledgement, or send rejection.

Business rules might include things like "if no request, tell user x". As can be seen, the first level 202 contains a textual description of the business or other process to be implemented by a computer system or otherwise electronically. The descriptions take the form of text that is very relevant to one who is designing the business process. In one sense, it is an abstract representation of the actual code that will be written, but in another sense, it separates the structure of the implementation from the expression of the process.

Business processes 211 and their associated events 221 represent the operational flow across the organization for which the software is being developed. Events 221, in the form of entry and exit events to the constituent functions, activities, and interfaces are connectors that define flow of control or interfaces between other units. Business activities and their associated events represent the operational flow across a unit within the organization. User interfaces 214 and their associated events 221 represent the specified interface map for the systems and software being developed.

Links 222 are formed from mapping of events 221 that represent interconnections, or from user interfaces 214. Integration services 223 are formed from mapping of events 221, business rules 216, or methods 235. A second five units represent the design architecture 204, and include, in some embodiments, components 231 that represent the basic software units of this approach, entry points 232, user interfaces 233, services 234, and methods 235. In some embodiments, each one of the first five units is mapped to a corresponding one of the second five units, e.g., business functions 212 are mapped to components 231, business activities 213 are mapped to entry points 232, user interfaces 214 are mapped to user interfaces 233, actions 215 are mapped to services 234, and business rules 216 are mapped to methods 235. In some embodiments, error conditions 236 are provided for methods 235.

In some embodiments, the third level 206 contains building blocks and customization. Data structure artifacts 241 are generated from the events 221 and the components 231, user-interface artifacts 242 are generated from the entry points 232 and the user interfaces 233 of the second five units, and application service artifacts 243 are generated from the services 234 and the methods 235. In some embodiments, application service artifacts 243 are also generated from integration services 223 and error conditions 236.

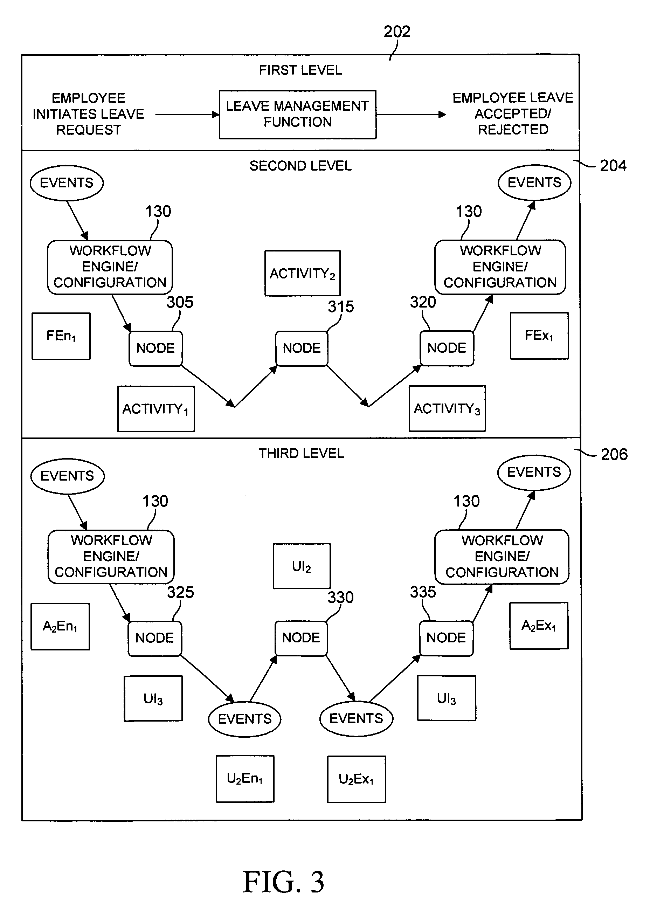

FIG. 3 represents connections within and across levels, which are used as the software is being developed and engineered.

The first level corresponding to level 202 in FIG. 3 in the diagram creates a process flow by depicting entry events and exit events to the constituent functions from/to other functions in the same process or across processes. The standard connective elements (which connect the standard architectural elements) are events that are triggered by and/or handled by the various architectural elements (FEn1, FEx1, AEn1, AEx1, UEn1, UEx1) FEn1 represents an entry event handled by function 1. FEx1 is an exit event generated by function 1. AEnl is an entry event handled by activity 1. Events are represented by ovals in FIG. 3. AEx1 is an exit event generated by activity 1. UEn1 is an entry event handled by User Interface 1. UEx1 is an exit event generated by User Interface 1.

The second level 204 for activity flow uses the entry event for the corresponding functions as the start event to create the set of activities and interactions thru events to reach the end events for the function. Each activity node 305, 315, and 320 is expanded along the same principles to depict the User Interface (UI) flow needed to complete the activity. The next level 206 represents tasks at task nodes 325, 330 and 335 on the UI and subsequently the business rules to be implemented for the tasks expanded. Events are again represented by ovals.

This approach creates a complete map of the system behavior up to the business rules/policies level and will be the driver for engaging with customers for whom the code is being written. The nodes translate to relevant nodes in engineering. The events that connect them are classified and translated to information-exchange events (these are implemented as UI look ups, and Data Look ups at the SP level for performing the validations), and transfer-of-control events (these are implemented as integration services across component boundaries and data updates or access across boundaries for local storage inside the component boundary).

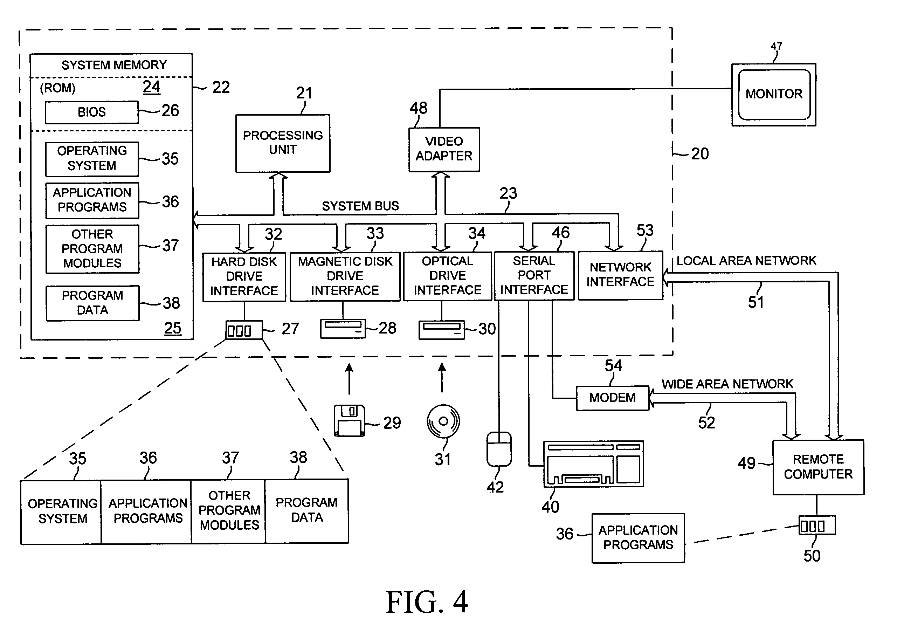

FIG. 4 is an overview diagram of a hardware and operating environment in conjunction with which embodiments of the invention may be practiced. The description of FIG. 4 is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCS, minicomputers, mainframe computers, and the like. The invention may also be practiced in distributed computer environments where tasks are performed by I/ 0 remote processing devices that are linked through a communications network. In a distributed computing environment, program modules may be located in both local and remote memory storage devices.

In the embodiment shown in FIG. 4, a hardware and operating environment is provided that is applicable to any of the servers and/or remote clients shown in the other Figure.

As shown in FIG. 4, one embodiment of the hardware and operating environment includes a general purpose computing device in the form of a computer 20 (e.g., a personal computer, workstation, or server), including one or more processing units 21, a system memory 22, and a system bus 23 that operatively couples various system components including the system memory 22 to the processing unit 21. There may be only one or there may be more than one processing unit 21, such that the processor of computer 20 comprises a single central-processing unit (CPU), or a plurality of processing units, commonly referred to as a multiprocessor or parallel-processor environment. In various embodiments, computer 20 is a conventional computer, a distributed computer, or any other type of computer.

The system bus 23 can be any of several types of bus structures including a memory bus or memory controller, a peripheral bus, and a local bus using any of a variety of bus architectures. The system memory can also be referred to as simply the memory, and, in some embodiments, includes read-only memory (ROM) 24 and random-access memory (RAM) 25. A basic input/output system (BIOS) program 26, containing the basic routines that help to transfer information between elements within the computer 20, such as during start-up, may be stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 couple with a hard disk drive interface 32, a magnetic disk drive interface 33, and an optical disk drive interface 34, respectively. The drives and their associated computer-readable media provide non volatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 29, optical disk 31, ROM 24, or RAM 25, including an operating system 35, one or more application programs 36, other program modules 37, and program data 38. A plug in containing a security transmission engine for the present invention can be resident on any one or number of these computer-readable media.

A user may enter commands and information into computer 20 through input devices such as a keyboard 40 and pointing device 42. Other input devices (not shown) can include a microphone, joystick, game pad, satellite dish, scanner, or the like. These other input devices are often connected to the processing unit 21 through a serial port interface 46 that is coupled to the system bus 23, but can be connected by other interfaces, such as a parallel port, game port, or a universal serial bus (USB). A monitor 47 or other type of display device can also be connected to the system bus 23 via an interface, such as a video adapter 48. The monitor 40 can display a graphical user interface for the user. In addition to the monitor 40, computers typically include other peripheral output devices (not shown), such as speakers and printers.

The computer 20 may operate in a networked environment using logical connections to one or more remote computers or servers, such as remote computer 49. These logical connections are achieved by a communication device coupled to or a part of the computer 20; the invention is not limited to a particular type of communications device. The remote computer 49 can be another computer, a server, a router, a network PC, a client, a peer device or other common network node, and typically includes many or all of the elements described above I/0 relative to the computer 20, although only a memory storage device 50 has been illustrated. The logical connections depicted in FIG. 4 include a local area network (LAN) 51 and/or a wide area network (WAN) 52. Such networking environments are commonplace in office networks, enterprise-wide computer networks, intranets and the internet, which are all types of networks.

When used in a LAN-networking environment, the computer 20 is connected to the LAN 51 through a network interface or adapter 53, which is one type of communications device. In some embodiments, when used in a WAN-networking environment, the computer 20 typically includes a modem 54 (another type of communications device) or any other type of communications device, e.g., a wireless transceiver, for establishing communications over the wide-area network 52, such as the internet. The modem 54, which may be internal or external, is connected to the system bus 23 via the serial port interface 46. In a networked environment, program modules depicted relative to the computer 20 can be stored in the remote memory storage device 50 of remote computer, or server 49. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

In the foregoing detailed description of embodiments of the invention, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus the following claims are hereby incorporated into the detailed description of embodiments of the invention, with each claim standing on its own as a separate embodiment. It is understood that the above description is intended to be illustrative, and not restrictive. It is intended to cover all alternatives, modifications and equivalents as may be included within the spirit and scope of the invention as defined in the appended claims. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein," respectively. Moreover, the terms "first," "second," and "third," etc., are used merely as labels, and are not intended to impose numerical requirements on their objects.

## Claims

1. A method comprising:
capturing details (601) of an enterprise application (100) in a repository specification and a workflow configuration model (130);
identifying user actions (602) that enable workflow using said details;
extending a design (604) of said enterprise application to user actions using said details; and
inserting method invocations (605) and service executions into said repository specification.

2. The method of claim 1, further comprising providing a facility for identifying a user to work on a transaction document, further comprising providing for said user to be part of a configurable set comprising one or more users, said one or more users having the ability to act on said document in different states, further comprising implementing a rule that specifies a number of said users who must work on said document before said document is passed onto another state.

3. The method of claim 1, further comprising: implementing rules for identifying a target user (607) of an action; implementing rules for governing a next state of a document (608); and determining subsequent actions to be performed, further comprising: including additional states to said document, the method further comprising capturing user group information, user identification rules, document routing rules, and profile and profile rules.

4. A system (100) comprising:
a workflow configuration model (130);
a workflow engine (120);
a specification repository (110); and
a facility resident in said workflow engine, said facility being capable of including additional states to said document;
wherein said workflow configuration model, said workflow engine, said specification repository (110), and said facility are associated with an enterprise application.

5. The system of claim 4, further comprising a second facility (124), said second facility mailing pending actions to appropriate users, and making said pending actions available in a work list page, thereby enabling a user to launch (115) said enterprise application from the mail or through the work list.

6. The system of claim 4, wherein said workflow engine manages said additional states, wherein said workflow configuration model (130) comprises data items (131), rules for a next state (132), a list of subsequent actions (133), and a next user list (134); and wherein said specification repository comprises method invocations and service execution calls.

7. A computer readable medium comprising instructions available thereon for executing a method comprising:
capturing details (601) of an enterprise application (100) in a repository specification and a workflow configuration model (130);
identifying user actions (602) that enable workflow using said details;
extending a design (604) of said enterprise application to user actions using said details; and
inserting method invocations (605) and service executions into said repository specification.

8. The computer readable medium of claim 7, further comprising instructions for providing a facility for identifying a user to work on a transaction document, further comprising instructions for providing for said user to be part of a configurable set comprising one or more users, said one or more users having the ability to act on said document in different states, further comprising instructions for implementing a rule that specifies a number of said users who must work on said document before said document is passed onto another state.

9. The computer readable medium of claim 7, further comprising instructions for:
implementing rules for identifying a target user of an action;
implementing rules for governing a next state of a document; and
determining subsequent actions to be performed.

10. The computer readable medium of claim 13, further comprising instructions for adding additional states to said document, further comprising instructions for capturing user group information, user identification rules, document routing rules, and profile and profile rules.
